# EUROPEAN PATENT SPECIFICATION

(11) **EP 4 072 908 B1**
(45) Date of publication and mention of the grant of the patent: **17.09.2025**
(21) Application number: 20900143.7
(22) Date of filing: 07.12.2020
(51) Int. Cl.: B60S 1/34, B60S 1/48, F16C 11/06

(54) **WINDSCREEN WIPER ASSEMBLY**
SCHEIBENWISCHERANORDNUNG
ENSEMBLE ESSUIE-GLACE

(30) Priority: 09.12.2019 NO 20191454
(43) Date of publication of application: 19.10.2022
(73) Proprietor: PODBIKE AS, 4031 Stavanger (NO)
(72) Inventor: SØRENSEN, Per Hassel, 4307 Sandnes (NO)
(74) Representative: Håmsø Patentbyrå AS
(86) International application number: PCT/NO2020/050307
(87) International publication number: WO 2021/118362

(56) References cited:
- EP-A1- 0 832 799
- WO-A1-2006/048284
- WO-A1-2006/048284
- WO-A1-2020/204902
- WO-A1-2020/204902
- FR-A1- 2 488 558
- FR-A1- 2 488 558
- JP-A- 2001 138 872
- JP-A- 2001 354 121
- JP-A- 2001 354 121
- RU-U1- 175 293
- US-A- 3 487 493
- US-B2- 9 868 419

## Description

The present invention relates to a windscreen wiper assembly for a double-curved windscreen. The invention also relates to a velomobile including such a windscreen wiper assembly.

Existing windscreen wipers for velomobiles are functional only for flat or nearly flat windscreens. In addition, the wiping action is actuated manually using a handle directly attached to the windscreen wiper shaft. This shaft is a single axis pivot directly connected to windscreen wiper arm located on the outside of the vehicle.

For some velomobiles where the front windshield is at a distance from the rider, the operating handle cannot be located directly on the wiper shaft. This can be solved by providing an electrically operated wiper; however, this adds weight and may cause extra wear on the windshield that is normally made of polymer due to weight reasons.

EP 0832799 A1 discloses a windscreen wiper for a vehicle, where a windshield wiper is mounted at the upper end of a drive shaft, the drive shaft being driven in alternating rotation around its axis by a motor in such as way that inclination of the shaft axis varies during use.

FR 2488558 A1 discloses another windshield wiper mechanism for use on "panoramic" windows, i.e. windows with a double curvature.

Prior right WO 2020/204902 A1 discloses a windshield wiper mechanism where a wiper arm drive mechanism is suspended in a first and second ball joint to allow the windshield wiper to more closely follow the curvature of a glass surface of a vehicle.

The invention has for its object to remedy or to reduce at least one of the drawbacks of the prior art, or at least provide a useful alternative to prior art.

The object is achieved through features, which are specified in the description below and in the claims that follow.

For a heavily double-curved windscreen surface, resembling that of an aircraft canopy, there is a need for a wiper mechanism that can better curve, or follow, the heavily double-curved shape of the windscreen surface in operation. By letting the windscreen wiper twist in two axes it is possible to follow the surface curvature of the double-curved windscreen surface. However, to do so will normally require advanced mechanical gears, which may increase mass and size of the windscreen wiper rotation mechanism. For a mainly human-powered velomobile, a windscreen wiper rotation mechanism should preferably be light and provide minimum air drag.

The present applicant has realised that by accepting some deviation from optimum path, it becomes possible to make a suitable twisting windscreen wiper rotation mechanism for a double-curved windscreen that requires few extra parts and is very light.

In a first aspect, the invention relates to a windscreen wiper assembly according to claim 1.

It should be noted that by "full rotational freedom" is meant that this rotary joint in itself allows full rotational freedom, but that the angular movement of the wiper arm may be limited or restricted in one or more directions in use, as will be exemplified below.

The windscreen wiper rotation mechanism comprises a movable shaft, and the wiper arm is connected to the first rotary joint via the movable shaft. The movable shaft is further connected to the wiper arm by means of a pivot connection at an upper portion of the movable shaft, whereby the windscreen wiper rotation mechanism are pivotal relative to the longitudinal axis of the wiper arm. In practice, the pivot connection is useful for allowing the movement of the arm to deviate from the curve of movement for the wiper arm defined by the first rotary joint. E.g. if the first rotary joint is a ball joint, the surface over which wiper arm is movement curve is defined will be that of a sphere. By letting the arm pivot relative to the shaft, deviation from a perfect sphere is enabled, which may be very beneficial for optimizing the fit of the windscreen wiper blade to a double-curved windscreen, in particular where the curvature of the windscreen deviates from that of a sphere in one or both curving directions. In certain embodiments, the pivot connection may allow pivoting of 45° upwardly and downwardly orthogonally to the shaft, implying that the angle between the shaft and the wiper arm may attain any angle between 45° and 135° in use.

In one embodiment, the wiper blade attachment may be connected to the wiper arm in a hinged and spring-loaded connection, whereby the spring is adapted to bias a wiper blade, attached to the wiper blade attachment, towards the double-curved windscreen in use. This will also contribute to a better fit and thus better wiping functionality. The biasing function may be used in addition to the pivot joint between the shaft and the arm discussed above, or preferably in combination with the pivot connection.

The movable shaft extends from the upper portion at the pivot connection, through the first rotary joint, and to a lower portion where the shaft is movably connected to an actuator assembly, whereby the actuator assembly is adapted to initiate rotation of the wiper arm by moving the lower portion of the shaft. The actuator assembly forms a part of the windscreen wiper rotation mechanism. As will be discussed in more detail below, the actuator assembly may be human-powered or it may be powered by electricity, such as by a battery already present in the vehicle, or by gas or hydraulics. In one embodiment, the actuator assembly may include a pneumatic spring, the pneumatic spring having a first end connected to the lower portion of the shaft and second end connectable to the vehicle, the pneumatic spring, upon being compressed, may be adapted to move the wiper arm to a first position, and wherein the pneumatic spring, upon being released to an uncompressed state, may be adapted to move the wiper arm to a second position. This offers a simple and reliable way of activating and controlling the movement of the wiper arm, where the extreme positions of the wiper arm will be defined by the stroke length of the pneumatic spring, and where the pneumatic spring will always return the wiper arm to its idle, starting position when no force is applied. In an alternative embodiment, the actuator assembly may include a linear, electric actuator, whereby simple electric windscreen wiping may be provided without driver involvement. It should also be noted that in its simplest form, the windscreen wiper assembly according to the invention may be operated manually without any actuator assembly.

In one embodiment, the actuator assembly may comprise a wire that compresses the pneumatic spring when a portion of the wire is pulled and a contact switch for controlling the activation of a windscreen washer system. In this embodiment, the contact switch may be mounted at a fixed position in relation to the pullable wire portion so that, in a first mode of actuation, the wire portion is pullable without coming into contact with the contact switch and, in a second mode of actuation, the wire portion is pullable while contacting with the contact switch. Also, in another embodiment, the first mode of actuation may comprise a central direction for pulling the wire portion, and a minimal angle difference between the central direction and a second direction for pulling the wire portion in the second mode of actuation may be an angle difference from 45 to 80 degrees.

In one embodiment, the rotation mechanism may further comprise a second rotary joint to which the wiper arm is also connected, the second rotary joint having a central point around which the wiper arm has full rotational freedom, the central point of the second rotary joint being provided at a fixed distance offset from the central point of the first rotary joint both vertically and horizontally relative to the longitudinal axis of the wiper arm. In a preferred embodiment, the central points of both the first and second rotary joints may be provided substantially at the longitudinal centre of the double-curved windscreen in use. In an even more preferred embodiment, the central point of the first rotary joint may be located in or near the plane of the windscreen, whereas the central point of the second rotary joint may be located slightly above the plane of the windscreen closer to the "bottom" om the windscreen than the first central point.

In one embodiment, the full rotational freedom of the first rotary joint may be provided by means of ball joint. The ball joint may be protected by an elastomeric jacket, such as a bellow, surrounding the joint. Ball joints are readily available off-the-shelf in a variety of sizes at a low cost and provide full rotational freedom in two planes while preventing translational freedom. In an alternative embodiment, the full rotational freedom may be provided letting the shaft extend through a hole in the double-curved windscreen, where the hole in the double-curved windscreen is lined with elastomer (rubber) to which the shaft is connected, e.g. by means of glue, where the central point of the rotary joint is then constituted by a central point on the shaft. It yet an alternative embodiment the first rotary joint, and also other rotary joints mentioned herein, may be replaced by another type of joint offering similar rotational freedom, such as a universal joint. However, in a preferred embodiment, both the first and second rotary joints are ball joints.

In one embodiment, the actuator assembly may be connected to a lower portion of the shaft via a third rotary joint and may further be connectable to the vehicle via a fourth rotary joint. This also provides rotational freedom for the actuator assembly relative to the shaft, allowing it to rotate both relative to the shaft and relative to the vehicle, which may be particularly useful if the actuator assembly is human-powered. One or both of the third and fourth rotary joints may also be ball joints.

In one embodiment, the third rotary joint may be adapted to, in a first mode of use, connect the actuator assembly to the lower portion of the shaft and, in a second mode of use, separate the actuator assembly from the windscreen wiper assembly. Also, the third rotary joint may be a ball joint comprising a ball and a socket enclosing the ball, the socket being openable to separate the ball from the socket.

In use, a wiper blade will be connected to the wiper blade attachment. In one embodiment the wiper blade may be connected to the wiper blade attachment by means of a pivot joint, whereby wiper blade may pivot relative to the wiper blade attachment around an axis substantially normal to the length axis of the wiper blade attachment, so as to optimize the fit between the wiper blade and the double-curved windscreen.

In a second embodiment, the invention relates to a velomobile with a double-curved windscreen, the velomobile comprising a windscreen wiper assembly according to the first aspect of the invention. It is also contemplated that invention may be used on other types of vehicles and even vessels, such as e.g. manned mini submarines, that also have canopy-type windows.

In the following is described an example of a preferred embodiment illustrated in the accompanying drawings, wherein:
- Fig. 1: shows, in a cross-sectional side view, a windscreen wiper assembly according to the invention attached to a double-curved window of a velomobile;
- Fig. 2: shows, in a perspective side view, details of the shaft of the rotation mechanism;
- Fig. 3: shows, in partially transparent side view, the wiper arm of the windscreen wiper assembly;
- Fig. 4: shows, in a perspective side view, an actuator assembly as included in a windscreen wiper assembly according to invention
- Fig. 5: shows, in a perspective side view, a windscreen wiper assembly according to the invention.

In the following, the reference numeral 100 is used to denote a windscreen wiper assembly according to the invention. It should be noted that the drawings are shown simplified and schematic, and that the various features therein are not necessarily drawn to scale.

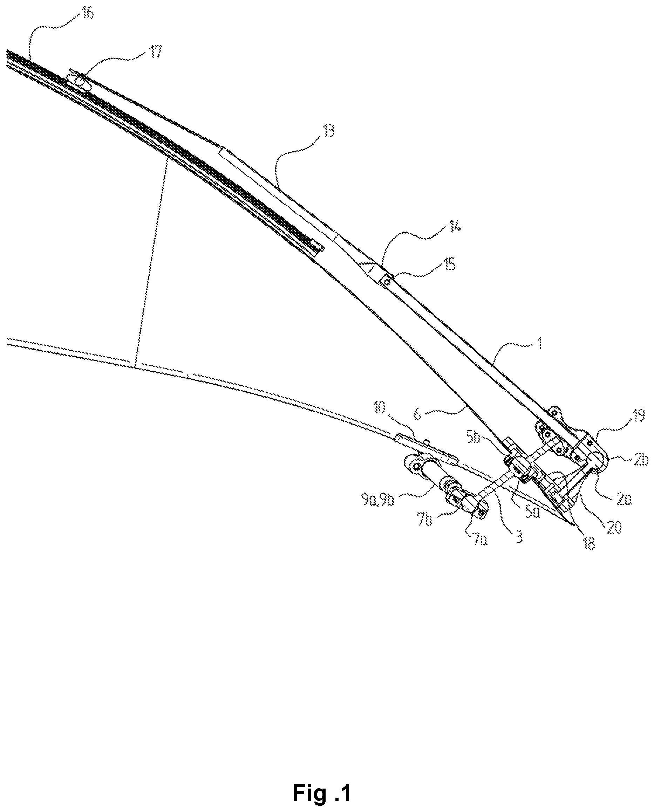

Fig. 1 shows one embodiment of a windscreen wiper assembly 100 according to the invention. The figure is a longitudinal cross-section through the centre of a double-curved windscreen 6 of a vehicle. A wiper arm 1 is connected to a first rotary joint 5a, b via a shaft 3, where the first rotary joint is a ball joint in the shown embodiment. A ball/sphere 5a of the ball joint is provided approximately in the middle of the shaft 3 in a socket 5b. The socket 5b is provided in a through-going hole in the double-curved windscreen 6 so that the central point of the ball joint is located approximately in the middle of the plane of the double-curved windscreen. In alternative embodiments, the first rotary joint could also be located below or above the plane of the double-curved windscreen 6. The socket 5b of the first rotary joint is provided in a windscreen bracket 18 which is used to fix the windscreen wiper assembly 100 to the double-curved windscreen 6 near the through-going hole. At its upper end, the shaft 3 is connected to the wiper arm 1 via a pivot joint 4a, 4b provided in an arm connector 19 at the distal end of the wiper arm 1, as will be explained in more detail below. The pivot joint 4a, 4b allows some pivoting of the shaft 3 relative to the longitudinal axis of the wiper arm 1. The wiper arm connector 19 is further connected to the windscreen bracket 18 via a second shaft 20, the second shaft 20 being rigidly connected to the windscreen bracket 18 and offset from the first shaft 3 along the longitudinal centre of the double-curved windscreen as seen in Fig. 1. The second shaft 20 is rotatably connected to the arm connector 19 in a second rotary joint 2a, 2b, which is also being provided in the form of a ball joint in the shown embodiment, where a ball 2a of the ball joint is connected to the top of the second shaft 20, while a socket 2b for ball 2a is integrated into the arm connector 19. The second shaft 20 in the shown embodiment has the shape of a cone with its widest part at the windscreen bracket 18, narrowing towards the ball 2a at the arm connector 19, whereby the central point of the second ball joint 2a, 2b is also located above the central point of the first ball joint 5a, 5b in a direction normal to the surface of the double-curved windscreen 6.

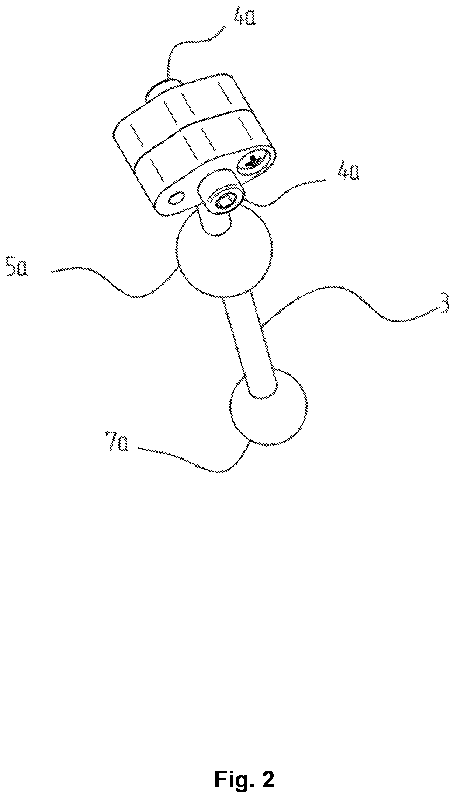

The shaft 3 is shown in more detail in Fig. 2. At its upper portion, the shaft 3 is provided with a head with axle pins 4a protruding in opposite directions orthogonal to the length of the shaft 3. In its mid portion, the shaft is provided the ball 5a of the first ball joint, while at its lower portion the shaft 3 is provided with a ball 7a of a third ball joint, as will be explained in more detail below, the third ball joint defining a connection between the lower portion of the shaft 3 and an actuator assembly for initiating the movement of the shaft 3 and thereby the movement of the whole wiper arm 1. The shaft 3 will normally be connected to the head and ball parts via threaded connections, though other connections, such as wedge connections, may also be used.

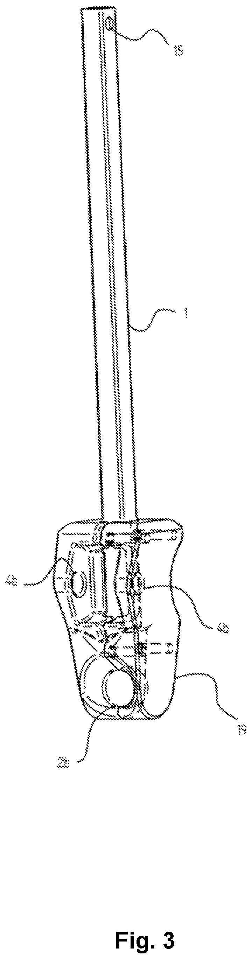

Fig. 3 shows an enlarged view of the wiper arm 1 with the arm connector 19 at its distal end. The arm connector 19 is shown partly transparent for the sake of clarity. The arm connector 19 is formed with two axle holes 4b adapted to mate with the axle pins 4a of the head of the shaft 3 as shown in Fig. 2. The axle pins 4a and holes 4b constitute a pivot connection allowing the wiper arm 1 to pivot relative to the windscreen 6 and windscreen bracket 18 in the longitudinal direction of the wiper arm. The arm connector 19 is also formed with a socket 2b for the second ball bearing 2. The arm connector is constituted by two parts screwed, bolted or otherwise connected together around the ball 2a and shaft head.

In use, the wiper arm 1 will follow the curvature of the first ball joint 5a, 5b, and the second ball joint 2a, 2b, and its arrangement in the arm connector 19 rotatably supports the arm connector19 while also restricting the angular movement of the wiper arm 1. The pivot joint 4a, 4b allows the wiper arm 1 to pivot relative to the shaft 3 so as to deviate from the spherical path defined by the first ball joint 5a, 5b. In the shown embodiment, an upper bore in the arm connector 19, just below the socket 2b of the second ball joint, comes into contact with the upper portion of the second shaft 20, just below the ball 2a, when the arm connector 19 moves from side to side, and therefore limits/restricts the sideways movement of the wiper arm 1.

It is observable that the ratio between the distance from the second ball joint 2a,2b to the pivot joint 4a,4b and the distance from the first ball joint 5a,5b to the pivot joint 4a,4b adjusts the angle between the wiper blade 16 and the double-curved windscreen 6. Thus, by static adjustment of this ratio it is possible to adjust the angle of the wiper blade 16 for optimum wiping of the double-curved windscreen 6. In a different embodiment of the wiping mechanism that continuously adjusts the distance from the second ball joint 2a,2b to the pivot joint 4a,4b it becomes possible to dynamically adjust the angle between the wiper blade 16 and the double-curved windscreen 6 as it wipes the windscreen surface. This may be required, depending on the shape of the double-curved windscreen 6, and can be implemented by a cam, groove or similar means of converting rotation into linear movement. One mechanical parameter that may be adjusted is the pressure that the wiper blade 16 applies on the double-curved windscreen 6, and this adjustment is achieved by varying the length of the second shaft 20. In this adjustment, the pressure on the double-curved windscreen 6 is directly proportional to the length of the second shaft 20.

To move the wiper arm 1, a force needs to be applied to the lower portion of the shaft 3. Force is applied by means of an actuator assembly, and in the shown embodiment, the actuator assembly connects to the lower portion of the shaft 3 in a third ball joint 7a, 7b. The lower portion of the shaft 3 defines the ball 7a of the third ball joint, while the socket portion 7b is connected to the outgoing shaft of a manually operated pneumatic spring/ piston 9b. In alternative embodiments, the actuator assembly can include a linear actuator 9a powered by a battery on the vehicle or by hydraulics or gas. In the shown embodiment, a force to compress the pneumatic piston 9b comes from a wire that may be pulled by the driver of the vehicle. Pulling the wire, through a guide 12, compresses the pneumatic spring 9b and simultaneously moves the shaft 3 thereby also the wiper arm 1 to a first position. Since the pneumatic piston 9b has a limited, and fixed stroke length, this also limits the movement of the wiper arm 1. The return movement of the wiper arm 1 to its idle starting position is power by the compressed gas in the pneumatic spring 9b extending the piston rod, and thus moving the shaft 3, and thereby wiper arm 1, back to its starting, idle position. The proximal end of the pneumatic spring, i.e. the end not connected to the shaft 3, is fixed to a position in the vehicle, normally along a side wall on the inside of the vehicle as indicated in Fig. 1, by means of a piston bracket 10. In the shown embodiment, the piston bracket 10 connects to the pneumatic spring 9b in a fourth rotary joint, where this fourth rotary joint also is a ball joint in the shown embodiment, though details of this fourth rotary joint are not visible in the drawings.

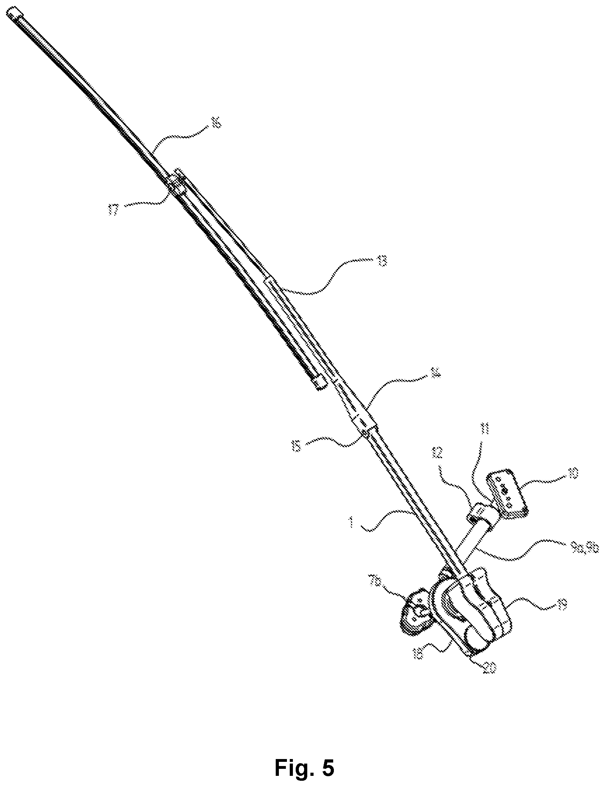

As seen in Figs. 1 and 5, a wiper arm attachment 13 is connected to the distal end of the wiper arm 1. The connection between the wiper arm 1 and wiper arm attachment 13 includes a hinge 15 and a spring 14 adapted to bias the wiper arm attachment 13 downwardly relative to the longitudinal axis of the wiper arm 1, so as to push a wiper blade 16, connected to the wiper blade attachment 13, towards the double-curved windscreen 6 in use. In the shown embodiment, the wiper blade 16 is connected to the wiper blade attachment at a pivot joint 17 allowing the wiper blade to rotate relative to the wiper blade attachment 13 in use around an axis substantially normal to the length axis of the wiper blade attachment.

In some situations, the vehicle on which the windscreen wiper assembly 1 is installed may also include a windscreen washer system for improving and expanding the function of the windscreen wiper assembly 1 to dry or icy conditions. The windscreen washer system is suitable for spraying a washer fluid, such as water, detergent and/or an antifreeze window washer fluid, at the double-curved windscreen 6, and it can help remove dirt or dust from the double-curved windscreen 6 when it is used in concert with the windscreen wiper assembly 1.

Several embodiments may be carried out for implementing the windscreen washer system. A typical windscreen washer system embodiment includes a tank for storing a washer fluid, at least one nozzle for spraying the washer fluid over the windscreen, a pumping system for pumping the washer fluid from the tank to the nozzle and a hosing/tubing system for connecting the pumping system with the nozzle and with the tank. In one embodiment, the nozzle of the windscreen washer system is mounted on the wiper blade attachment 13, for example at a mounting position that is over or substantially proximal to the pivot joint 17 so that the washer fluid may be sprayed from the nozzle's mounting position.

In another windscreen wiper assembly 1 embodiment, the actuator assembly is adapted to combine the actuation for moving the wiper arm 1 with the activation of the windscreen washer system. This combination is particularly useful in a human-powered vehicle because it reduces the number of components that need to be handled and/or manoeuvred by the user in addition to the components already being operated, such as the pedalling and steering components of the vehicle.

As described above, one embodiment of the actuator assembly includes a wire that is pulled through the guide 12 in order to apply a force to the lower portion of the shaft 3 and thus move the wiper arm 1. This puling of the wire compresses the pneumatic spring 9b. In this embodiment, the wire may be guided by the guide 12 through the interior of the vehicle (not shown in the Figures) so that a portion of the wire is positioned in a manner that is suitable to be pulled by the user of the vehicle while pedalling. The need to guide the wire through the interior of the vehicle depends on the distance between the windscreen wiper assembly 1 and the handle(s) used for steering the vehicle. Thus, in some embodiments, the guide 12 may be unnecessary and the wire is pulled directly from the pneumatic spring/piston 9b.

The pullable portion of the wire can be carried out in several ways. In one embodiment, the pullable portion of the wire is implemented by forming a tie or a loop at the end of the wire, the tie or loop being suitable to be grabbed and pulled by the user. In another embodiment, the pullable portion is implemented by a handle that is fixed to the end of the wire, the handle also being suitable to be grabbed and pulled by the user. In a further embodiment, the pullable portion of the wire is carried out by an intermediate segment of the wire that is constrained between two fixed positions that are distanced from each other.

Moreover, this embodiment of the actuator assembly includes a contact switch for controlling the activation of the windscreen washer system. In one embodiment, the activation of the contact switch activates the windscreen washer system to spray washer fluid over the double-curved windscreen 6. The contact switch is mounted on a fixed position in relation to the pullable wire portion so that two modes of actuation are provided: in a first mode of actuation, the wire portion is pullable without coming into contact with the contact switch; and in a second mode of actuation, the wire portion is pullable while contacting with the contact switch. Thus, it becomes possible for the user to use only one hand and arm motion to control both the movement of the wiper arm 1 and the activation of the windscreen washer system.

The position of the contact switch in relation to the pullable portion of the wire can be carry out in several ways. In one embodiment, the fixed position of the contact switch is defined so that the first mode of actuation comprises a central direction for pulling the wire portion and a minimal angle difference is established between the central direction and a second direction for pulling the wire portion in the second mode of actuation. Thus, the user will be able to pull the wire approximately in the central direction of the first mode of actuation, but, once the wire is pulled in a direction that is sufficiently deviated from the central direction in order to overtake the minimal angle difference, the wire comes into contact with the contact switch and the second mode of actuation is enabled. By changing the minimal angle difference, it becomes possible to configure the sensitivity of the activation of the windscreen washer system. In one embodiment, the minimal angle difference is an angle difference from 45 to 80 degrees.

Moreover, in some situations, it can be useful to provide a vehicle, such as a velomobile, with a double-curved window 6 that is easy to detach from and reattach to the vehicle. This can be useful for a vehicle's user that, when there is good weather, is interested in riding the vehicle in a similar fashion to driving a convertible or cabriolet car without a roof in place. However, detaching the double-curved window 6 may not be easy due to the presence of the rotation mechanism of the windscreen wiper assembly 100 and how it is mechanically connected to a fixed position in the vehicle, such as a side wall on the inside of the vehicle.

The versatility to detach the double-curved window 6 in an easy manner can be achieved by providing a windscreen wiper assembly 100 in which the third rotary joint 7a,7b is adapted to be used in two modes. In the first mode of use, the third rotary joint 7a,7b connects the actuator assembly to the lower portion of the shaft and, thus, enables the actuation of the rotation mechanism of the windscreen wiper assembly 100. In the second mode of use, the third rotary joint 7a,7b is adapted to separate the actuator assembly from the windscreen wiper assembly 100 and therefore contributes to an easy manner of detaching the double-curved window 6 from the vehicle.

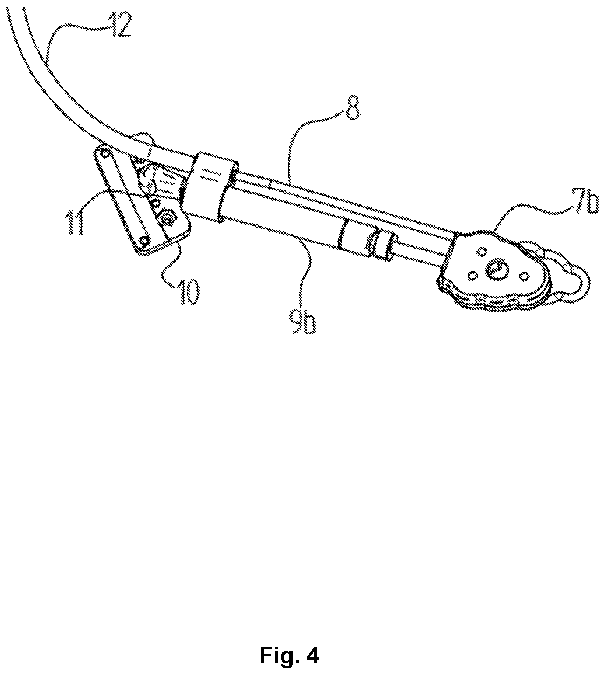

The third rotary joint 7a,7b may be a ball joint, for example as shown in Figs. 1, 2, 4 and 5, the ball joint including a ball 7a and a socket 7b. In one embodiment, the socket 7b is adapted to be openable so that the ball 7a may be separated from the socket 7b. This adaptation can be implemented in many ways, such as by providing the socket 7b with two parts for enclosing the ball 7a and a coupling mechanism that allows a user to couple and decouple those two parts when intended. The coupling mechanism can involve the use of at least one of a screw, a bolt and a nut, a fastening mechanism, and a hinge.

The ability to easily detach and reattach the double-curved window 6 allows providing a vehicle that is suitable for use both in good and bad weather, for example: when there are sunny conditions and detaching the double-curved window 6 is adequate; and, when there are rainy conditions and the windscreen wiper assembly 100 is useful to wipe the double-curved window 6 and remove rain water accumulated thereon.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. Windscreen wiper assembly (100) for a double-curved windscreen (6) for a vehicle, the windscreen wiper assembly (100) comprising:
- a wiper arm (1) connected to a wiper blade attachment (13), the wiper arm (1) having a longitudinal axis;
- a windscreen wiper rotation mechanism to which the wiper arm (1) is connected for moving the windscreen wiper blade attachment (13) across the double-curved windscreen (6), a portion of the windscreen wiper rotation mechanism adapted to be fixed relative to the double-curved windscreen (6),
wherein the windscreen wiper rotation mechanism includes a first rotary joint (5a, 5b) having a central point, around which the wiper arm (1) has full rotational freedom, whereby the wiper arm (1), upon being moved by the windscreen wiper rotation mechanism, may substantially follow the curvature of the double-curved windscreen (6), **characterised in that** the windscreen wiper rotation mechanism comprises a movable shaft (3), wherein the wiper arm (1) is connected to the first rotary joint (5a, 5b) via the movable shaft (3), the movable shaft (3) being connect to the wiper arm (1) by means of a pivot connection (4a, 4b) at an upper portion of the movable shaft (3), whereby the wiper arm (1) is pivotal relative to the shaft (3) around an axis normal to the shaft (3) and to the longitudinal axis of the wiper arm (1), wherein the movable shaft (3) extends from the upper portion at the pivot connection (4a, 4b), through the first rotary joint (5a, 5b), and to a lower portion where the shaft (3) is movably connected to an actuator assembly, the actuator assembly forming a part of the windscreen wiper rotation mechanism, whereby the actuator assembly is adapted to initiate rotation of the wiper arm (1) by moving the lower portion of the shaft (3).

2. Windscreen wiper assembly (100) according to any of the claim 1, wherein the wiper blade attachment (13) is connected to the wiper arm (1) in a hinged and spring-loaded connection (14, 15), whereby the spring (14) is adapted to bias a wiper blade (16), attached to the wiper blade attachment (13), towards the double-curved windscreen (6) in use.

3. Windscreen wiper assembly (100) according to claim 1 or 2, where the actuator assembly includes a pneumatic spring (9b), the pneumatic spring (9b) having a first end connected to the lower portion of the shaft (3) and second end connectable to the vehicle, the pneumatic spring (9b), upon being compressed, is adapted to move the wiper arm (3) to a first position, and wherein the pneumatic spring (9b), upon being released to an uncompressed state, being adapted to move the wiper arm (3) to a second position.

4. Windscreen wiper assembly (100) according to claim 3, wherein the actuator assembly comprises:
- a wire that compresses the pneumatic spring (9b) when a portion of the wire is pulled; and
- a contact switch for controlling the activation of a windscreen washer system,
wherein the contact switch is mounted at a fixed position in relation to the pullable wire portion so that, in a first mode of actuation, the wire portion is pullable without coming into contact with the contact switch and, in a second mode of actuation, the wire portion is pullable while contacting with the contact switch.

5. Windscreen wiper assembly (100) according to claim 4, wherein the first mode of actuation comprises a central direction for pulling the wire portion, and
wherein a minimal angle difference between the central direction and a second direction for pulling the wire portion in the second mode of actuation is an angle difference from 45 to 80 degrees.

6. Windscreen wiper assembly (100) according to claim 1 or 2, wherein the actuator assembly includes a linear, electric actuator.

7. Windscreen wiper assembly (100) according to any of the preceding claims, wherein the windscreen wiper rotation mechanism further comprises a second rotary joint (2a, 2b) to which the wiper arm (1) is also connected, the second rotary joint (2a, 2b) having a central point around which the wiper arm (1) has full rotational freedom, the central point of the second rotary joint (2a, 2b) being provided at a fixed distance offset from the central point of the first rotary axis both vertically and horizontally relative to the longitudinal axis of the wiper arm (1).

8. Windscreen wiper assembly (100) according to any of the preceding claims, wherein the first rotary joint (5a, 5b) is a ball joint.

9. Windscreen wiper assembly (100) according to claim 7 or 8, wherein the second rotary joint (2a, 2b) is a ball joint.

10. Windscreen wiper assembly (100) according to any of the preceding claims, wherein the actuator assembly is connected to the lower portion of the shaft (3) via a third rotary joint (7a, 7b) and further connectable to the vehicle via a fourth rotary joint.

11. Windscreen wiper assembly (100) according to claim 10, wherein the third rotary joint (7a, 7b) is adapted to, in a first mode of use, connect the actuator assembly to the lower portion of the shaft (3) and, in a second mode of use, separate the actuator assembly from the windscreen wiper assembly (100).

12. Windscreen wiper assembly (100) according to claim 11, wherein the third rotary joint (7a, 7b) is a ball joint comprising a ball and a socket enclosing the ball, the socket being openable to separate the ball from the socket.

13. Windscreen wiper assembly according to claim 10 or 11, wherein one or both of the third (7a, 7b) and fourth rotary joints is/are ball joint(s).

14. Windscreen wiper assembly (100) according to any of the preceding claims, the windscreen wiper assembly (100) further comprising a wiper blade (16) connected to the wiper blade attachment (13).

15. Windscreen wiper assembly (100) according to claim 14, wherein the wiper blade (16) is connected to the wiper blade attachment (13) via a pivot joint (17) allowing the wiper blade (16) to pivot relative to the wiper blade attachment (13) around and axis substantially normal to the length axis of the wiper blade attachment .

16. Velomobile with a double-curved windscreen (6), the velomobile comprising a windscreen wiper assembly (100) according to claim 1.

17. Velomobile according to claim 16, wherein the central point of the first rotary joint (5a, 5b) is located in or near the plane of the double-curved window (6).

## Patentansprüche

1. Scheibenwischeranordnung (100) für eine doppelt gebogene Windschutzscheibe (6) für ein Fahrzeug, wobei die Scheibenwischeranordnung (100) Folgendes umfasst:
- einen Wischerarm (1), der mit einer Wischerblattbefestigung (13) verbunden ist, wobei der Wischerarm (1) eine Längsachse aufweist;
- einen Windschutzscheibenwischerdrehmechanismus, mit dem der Wischerarm (1) zum Verschieben der Windschutzscheibenwischerblattbefestigung (13) über die doppelt gebogene Windschutzscheibe (6) verbunden ist, wobei ein Teil des Windschutzscheibenwischerdrehmechanismus so ausgelegt ist, dass er relativ zu der doppelt gebogenen Windschutzscheibe (6) fixiert werden kann,
wobei der Windschutzscheibenwischerdrehmechanismus ein erstes Drehgelenk (5a, 5b) mit einem Mittelpunkt aufweist, um das der Wischerarm (1) volle Drehfreiheit hat, wobei der Wischerarm (1), bei dem Bewegen durch den Windschutzscheibenwischerdrehmechanismus im Wesentlichen der Krümmung der doppelt gebogenen Windschutzscheibe (6) folgen kann, **dadurch gekennzeichnet, dass** der Windschutzscheibenwischerdrehmechanismus eine bewegliche Welle (3) umfasst, wobei der Wischerarm (1) mit dem ersten Drehgelenk (5a, 5b) über die bewegliche Welle (3) verbunden ist, wobei die bewegliche Welle (3) mittels einer Schwenkverbindung (4a, 4b) an einem oberen Teil der beweglichen Welle (3) mit dem Wischerarm (1) verbunden ist, wobei der Wischerarm (1) relativ zur Welle (3) um eine Achse senkrecht zu der Welle (3) und zu der Längsachse des Wischerarms (1) schwenkbar ist, wobei sich die bewegliche Welle (3) von dem oberen Abschnitt an der Schwenkverbindung (4a, 4b) durch das erste Drehgelenk (5a, 5b) erstreckt, und zu einem unteren Teil, wo die Welle (3) beweglich mit einer Stellgliedbaugruppe verbunden ist, wobei die Stellgliedbaugruppe einen Teil des Windschutzscheibenwischerdrehmechanismus bildet, wobei die Stellgliedbaugruppe so ausgelegt ist, dass sie durch Verschieben des unteren Teils der Welle (3) die Drehung des Wischerarms (1) einleitet.

2. Scheibenwischeranordnung (100) nach einem der Ansprüche 1, wobei die Wischerblattbefestigung (13) mit dem Wischerarm (1) in einer scharnierenden und federbelasteten Verbindung (14, 15) verbunden ist, wobei die Feder (14) angepasst ist, um ein an der Wischerblattbefestigung (13) befestigtes Wischerblatt (16) in Richtung der verwendeten doppelt gebogenen Windschutzscheibe (6) zu verkanten.

3. Scheibenwischeranordnung (100) nach Anspruch 1 oder 2, wobei die Stellgliedbaugruppe eine Gasdruckfeder (9b) einschließt, wobei die Gasdruckfeder (9b) ein erstes Ende aufweist, das mit dem unteren Teil der Welle (3) verbunden ist, und das zweite Ende mit dem Fahrzeug verbunden werden kann, wobei die Gasdruckfeder (9b), beim Zusammendrücken, so ausgelegt ist, um den Wischerarm (3) in eine erste Position zu bewegen, wobei die Gasdruckfeder (9b), beim Loslassen in einen entspannten Zustand, zum Bewegen des Wischerarms (3) in eine zweite Position ausgelegt ist.

4. Scheibenwischeranordnung (100) nach Anspruch 3, wobei die Stellgliedbaugruppe Folgendes umfasst:
- einen Draht, der die Gasdruckfeder (9b) zusammendrückt, wenn ein Teil des Drahts gezogen wird; und
- einen Kontaktschalter zur Steuerung der Aktivierung einer Windschutzscheibenwaschanlage,
wobei der Kontaktschalter in einer festen Position in Bezug auf den ziehbaren Drahtteil montiert ist, so dass der Drahtteil in einem ersten Stellmodus ziehbar ist, ohne den Kontaktschalter zu berühren, und der Drahtteil in einem zweiten Stellmodus während des Kontakts mit dem Kontaktschalter ziehbar ist.

5. Scheibenwischeranordnung (100) nach Anspruch 4, wobei der erste Stellmodus eine zentrale Richtung zum Ziehen des Drahtteils umfasst, und
wobei ein minimaler Winkelunterschied zwischen der Mittelrichtung und einer zweiten Richtung zum Ziehen des Drahtteils in den zweiten Stellmodus ein Winkelunterschied von 45 bis 80 Grad ist.

6. Scheibenwischeranordnung (100) nach Anspruch 1 oder 2, wobei die Stellgliedbaugruppe einen linearen, elektrischen Stellglied umfasst.

7. Scheibenwischeranordnung (100) nach einem der vorhergehenden Ansprüche, wobei der Windschutzscheibenwischerdrehmechanismus weiter umfasst, dass ein zweites Drehgelenk (2a, 2b), mit dem der Wischerarm (1) ebenfalls verbunden ist, das zweite Drehgelenk (2a, 2b) einen Mittelpunkt aufweist, um den der Wischerarm (1) vollständige Drehfreiheit hat, der Mittelpunkt des zweiten Drehgelenks (2a, 2b) sowohl vertikal als auch horizontal zur Längsachse des Wischerarms (1) in einem festen Abstand vom Mittelpunkt der ersten Drehachse versetzt bereitgestellt sein.

8. Scheibenwischeranordnung (100) nach einem der vorhergehenden Ansprüche, wobei das erste Drehgelenk (5a, 5b) ein Kugelgelenk ist.

9. Scheibenwischeranordnung (100) nach Anspruch 7 oder 8, wobei das zweite Drehgelenk (2a, 2b) ein Kugelgelenk ist.

10. Scheibenwischeranordnung (100) nach einem der vorhergehenden Ansprüche, wobei die Stellgliedbaugruppe über ein drittes Drehgelenk (7a, 7b) mit dem unteren Teil der Welle (3) verbunden und über ein viertes Drehgelenk weiter mit dem Fahrzeug verbindbar ist.

11. Scheibenwischeranordnung (100) nach Anspruch 10, wobei das dritte Drehgelenk (7a, 7b) so ausgelegt ist, um in einem ersten Verwendungsmodus die Stellgliedbaugruppe mit dem unteren Teil der Welle (3) zu verbinden und in einem zweitem Verwendungsmodus die Stellgliedbaugruppe von der Scheibenwischeranordnung (100) zu trennen.

12. Scheibenwischeranordnung (100) nach Anspruch 11, wobei das dritte Drehgelenk (7a, 7b) ein Kugelgelenk ist, das eine Kugel und eine Hülse umfasst, die die Kugel umschließt, wobei die Hülse zu öffnen ist, um die Kugel von der Hülse zu trennen.

13. Scheibenwischeranordnung nach Anspruch 10 oder 11, wobei eines oder beide der dritten (7a, 7b) und vierten Drehgelenke Kugelgelenk(e) ist/sind.

14. Scheibenwischeranordnung (100) nach einem der vorhergehenden Ansprüche, wobei die Scheibenwischeranordnung (100) weiter ein mit der Wischerblattbefestigung (13) verbundenes Wischerblatt (16) umfasst.

15. Scheibenwischeranordnung (100) nach Anspruch 14, wobei das Wischerblatt (16) über ein Drehgelenk (17) mit der Wischerblattbefestigung (13) verbunden ist, wodurch das Wischerblatt (16) relativ zur Wischerblattbefestigung (13) um und im Wesentlichen senkrecht zur Längenachse der Wischerblattbefestigung schwenkbar ist.

16. Velomobil mit einer doppelt gebogenen Windschutzscheibe (6), wobei das Velomobil eine Scheibenwischeranordnung (100) nach Anspruch 1 umfasst.

17. Velomobil nach Anspruch 16, wobei sich der Mittelpunkt des ersten Drehgelenks (5a, 5b) in oder nahe der Ebene des doppelt gebogenen Fensters (6) befindet.

## Revendications

1. Ensemble (100) essuie-glace pour un pare-brise (6) à double courbure pour un véhicule, l'ensemble (100) essuie-glace comprenant :
- un bras (1) d'essuie-glace relié à une fixation (13) de balai d'essuie-glace, le bras (1) d'essuie-glace présentant un axe longitudinal ;
- un mécanisme de rotation d'essuie-glace auquel le bras (1) d'essuie-glace est relié pour déplacer la fixation (13) de balai d'essuie-glace à travers le pare-brise (6) à double courbure, une partie du mécanisme de rotation d'essuie-glace est adaptée pour être fixée par rapport au pare-brise (6) à double courbure,
dans lequel le mécanisme de rotation d'essuie-glace inclut un premier joint (5a, 5b) rotatif présentant un point central, autour duquel le bras (1) d'essuie-glace a une totale liberté de rotation, dans lequel le bras (1) d'essuie-glace, lorsqu'il est déplacé par le mécanisme de rotation d'essuie-glace, peut suivre sensiblement la courbure du pare-brise (6) à double courbure, **caractérisé en ce que** le mécanisme de rotation d'essuie-glace comprend un arbre (3) mobile, dans lequel le bras (1) d'essuie-glace est relié au premier joint (5a, 5b) rotatif via l'arbre (3) mobile, l'arbre (3) mobile étant relié au bras (1) d'essuie-glace au moyen d'une liaison (4a, 4b) pivotante au niveau d'une partie supérieure de l'arbre (3) mobile, moyennant quoi le bras (1) d'essuie-glace est pivotant par rapport à l'arbre (3) autour d'un axe normal à l'arbre (3) et à l'axe longitudinal du bras (1) d'essuie-glace, dans lequel l'arbre (3) mobile s'étend depuis la partie supérieure au niveau de la liaison (4a, 4b) pivotante, à travers le premier joint (5a, 5b) rotatif, et à une partie inférieure où l'arbre (3) est relié de manière mobile à un ensemble actionneur, l'ensemble actionneur formant une partie du mécanisme de rotation d'essuie-glace, moyennant quoi l'ensemble actionneur est adapté pour initier la rotation du bras (1) d'essuie-glace en déplaçant la partie (3) inférieure de l'arbre.

2. Ensemble (100) essuie-glace selon la revendication 1, dans lequel la fixation (13) de balai d'essuie-glace est reliée au bras (1) d'essuie-glace dans une liaison (14, 15) articulée et à ressort, moyennant quoi le ressort (14) est adapté pour incliner un balai (16) d'essuie-glace, fixé à la fixation (13) de balai d'essuie-glace, vers le pare-brise (6) à double courbure en utilisation.

3. Ensemble (100) essuie-glace selon la revendication 1 ou la revendication 2, où l'ensemble actionneur inclut un ressort (9b) pneumatique, le ressort (9b) pneumatique présentant une première extrémité reliée à la partie inférieure de l'arbre (3) et une seconde extrémité reliable au véhicule, le ressort (9b) pneumatique, lorsqu'il est comprimé, est adapté pour déplacer le bras (3) d'essuie-glace dans une première position, et dans lequel le ressort (9b) pneumatique, lorsqu'il est relâché dans un état non comprimé, est adapté pour déplacer le bras (3) d'essuie-glace à une seconde position.

4. Ensemble (100) essuie-glace selon la revendication 3, dans lequel l'ensemble actionneur comprend :
- un fil qui comprime le ressort (9b) pneumatique lorsqu'une partie du fil est tirée ; et
- un contacteur pour commander l'activation d'un système de lave-glace, dans lequel le contacteur est monté à une position fixe par rapport à la partie de fil extractible de sorte que, dans un premier mode d'actionnement, la partie de fil est extractible sans entrer en contact avec le contacteur et, dans un second mode d'actionnement, la partie de fil est extractible tout en étant en contact avec le contacteur.

5. Ensemble (100) essuie-glace selon la revendication 4, dans lequel le premier mode d'actionnement comprend une direction centrale pour tirer la partie de fil, et
dans lequel une différence d'angle minimale entre la direction centrale et une seconde direction pour tirer la partie de fil dans le second mode d'actionnement est une différence d'angle de 45 à 80 degrés.

6. Ensemble (100) essuie-glace selon la revendication 1 ou la revendication 2, dans lequel l'ensemble actionneur inclut un actionneur électrique linéaire.

7. Ensemble (100) essuie-glace selon l'une quelconque des revendications précédentes, dans lequel le mécanisme de rotation d'essuie-glace comprend en outre un deuxième joint (2a, 2b) rotatif auquel le bras (1) d'essuie-glace est également relié, le deuxième joint (2a, 2b) rotatif présentant un point central autour duquel le bras (1) d'essuie-glace a une totale liberté de rotation, le point central du deuxième joint (2a, 2b) rotatif étant prévu à une distance fixe décalée du point central du premier axe de rotation à la fois verticalement et horizontalement par rapport à l'axe longitudinal du bras (1) d'essuie-glace.

8. Ensemble (100) essuie-glace selon l'une quelconque des revendications précédentes, dans lequel le premier joint (5a, 5b) rotatif est un joint à rotule.

9. Ensemble (100) essuie-glace selon la revendication 7 ou la revendication 8, dans lequel le deuxième joint (2a, 2b) rotatif est un joint à rotule.

10. Ensemble (100) essuie-glace selon l'une quelconque des revendications précédentes, dans lequel l'ensemble actionneur est relié à la partie inférieure de l'arbre (3) via un troisième joint (7a, 7b) rotatif et peut en outre être relié au véhicule via un quatrième joint rotatif.

11. Ensemble (100) essuie-glace selon la revendication 10, dans lequel le troisième joint (7a, 7b) rotatif est adapté pour, dans un premier mode d'utilisation, connecter l'ensemble actionneur à la partie inférieure de l'arbre (3) et, dans un second mode d'utilisation, séparer l'ensemble actionneur de l'ensemble (100) essuie-glace.

12. Ensemble (100) essuie-glace selon la revendication 11, dans lequel le troisième joint (7a, 7b) rotatif est un joint à rotule comprenant une rotule et un logement enfermant la rotule, le logement pouvant s'ouvrir pour séparer la rotule du logement.

13. Ensemble essuie-glace selon la revendication 10 ou la revendication 11, dans lequel l'un ou les deux des troisième (7a, 7b) et quatrième joints rotatifs est/sont un/des joint(s) à rotule.

14. Ensemble (100) essuie-glace selon l'une quelconque des revendications précédentes, l'ensemble (100) essuie-glace comprenant en outre un balai (16) d'essuie-glace relié à la fixation (13) de balai d'essuie-glace.

15. Ensemble (100) essuie-glace selon la revendication 14, dans lequel le balai (16) d'essuie-glace est relié à la fixation (13) de balai d'essuie-glace via un joint (17) pivotant permettant au balai (16) d'essuie-glace de pivoter par rapport à la fixation (13) de balai d'essuie-glace autour et d'un axe sensiblement normal à l'axe de longueur de la fixation de balai d'essuie-glace.

16. Vélomobile avec un pare-brise (6) doublement incurvé, le vélomobile comprenant un ensemble (100) essuie-glace selon la revendication 1.

17. Vélomobile selon la revendication 16, dans lequel le point central du premier joint (5a, 5b) rotatif est situé dans ou près du plan de la fenêtre (6) à double courbure.
